(19) Europäisches Patentamt
European Patent Office
Office européen des brevets

(11) EP 4 361 202 A1

(12) **EUROPEAN PATENT APPLICATION**
published in accordance with Art. 153(4) EPC

(43) Date of publication:
**01.05.2024 Bulletin 2024/18**

(21) Application number: **22828350.3**

(22) Date of filing: **17.06.2022**

(51) International Patent Classification (IPC):
***C08J 5/04*** *(2006.01)*

(52) Cooperative Patent Classification (CPC):
**C08J 5/04**

(86) International application number:
**PCT/JP2022/024323**

(87) International publication number:
**WO 2022/270433 (29.12.2022 Gazette 2022/52)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **24.06.2021 JP 2021104634**

(71) Applicant: **Kuraray Co., Ltd.**
**Kurashiki-shi, Okayama 710-0801 (JP)**

(72) Inventors:
- **INOUE, Yuki**
**Tokyo 100-0004 (JP)**
- **TSUDAKA, Takeshi**
**Kurashiki-shi, Okayama 713-8550 (JP)**
- **KATSUYA, Satoshi**
**Okayama-shi, Okayama 702-8601 (JP)**
- **TSUNOFURI, Shohei**
**Kurashiki-shi, Okayama 713-8550 (JP)**

(74) Representative: **Müller-Boré & Partner Patentanwälte PartG mbB**
**Friedenheimer Brücke 21**
**80639 München (DE)**

# (54) FIBER STRUCTURE, CROSSLINKED MOLDED BODY, AND METHOD FOR MANUFACTURING CROSSLINKED MOLDED BODY

(57) Provided are: a fiber structure including two types of heat-crosslinkable thermoplastic resins; and a crosslinked molded body obtained by heat-crosslinking the thermoplastic resins with each other. The fiber structure includes at least a thermoplastic resin A and a thermoplastic resin B both heat-crosslinkable with each other. The thermoplastic resin A is an amorphous epoxy-type resin, and at least one of the thermoplastic resins A and B has a fiber shape.

EP 4 361 202 A1

## Description

CROSS REFERENCE TO THE RELATED APPLICATION

This application is based on and claims Convention priority to Japanese patent application No. 2021-104634, filed June 24, 2021, the entire disclosure of which is herein incorporated by reference as a part of this application.

BACKGROUND OF THE INVENTION

(Field of the Invention)

The present invention relates to a fiber structure comprising two types of thermoplastic resins at least one of which has a fiber shape and both of which are heat-crosslinkable with each other (crosslinkable with each other upon being heated), and further relates to a crosslinked molded body obtained by heat-crosslinking the thermoplastic resins with each other.

(Description of Related Art)

Plastic molding materials have lower weights and more excellent moldability than metal materials. Therefore, the plastic molding materials are used singly or in combination with reinforcing fibers such as glass fibers and carbon fibers, for various articles for sports, bicycles, housings for various electric/electronic devices or the like, and furthermore, industrial members. Use of the plastic molding materials have been increasingly expanding.

Situations in which the plastic molding materials are used can be roughly classified into situations in which thermosetting resins are used and situations in which thermoplastic resins are used.

In general, a thermosetting-resin molded body can be manufactured as follows. That is, a crosslinking agent and a thermosetting resin are combined with each other and caused to undergo chemical crosslinking through heating so that thermal curing occurs, whereby an intended molded body is manufactured.

For example, Patent Document 1 (WO2016/152856) discloses a fiberreinforced plastic molding material in which fine particles of a matrix resin are adhered to a reinforcing fiber substrate through powder coating. The matrix resin contains a thermoplastic phenoxy resin, a thermosetting epoxy resin, and a crosslinking agent as essential components. The phenoxy resin has a melt viscosity of 3,000 Pa s or lower at any temperature within a range from 160 to 220°C and is in solid form at normal temperature. The fine particles of the matrix resin have an average particle diameter (d50) of from 10 to 150 μm. This document describes that an FRP molded body having high heat resistance and mechanical strength can be obtained with high productivity and at low cost by adhering fine particles of the phenoxy resin to the reinforcing fiber substrate and then thermos-curing the phenoxy resin, the epoxy resin, and the crosslinking agent through thermosetting reaction.

Meanwhile, regarding a thermoplastic-resin molded body, there has been a proposal of manufacturing an intended molded body by temporarily melting a thermoplastic resin, forming the melted thermoplastic resin into a desired shape, and then cooling the thermoplastic resin so as to fix the shape.

For example, Patent Document 2 (WO2014/021084) discloses a nonwoven fabric used for manufacturing a heat-resistant resin complex. The nonwoven fabric for a heat-resistant resin complex includes a heat-resistant thermoplastic fiber, a reinforcing fiber, and a polyester-type binder fiber. In this document, examples of the heat-resistant thermoplastic fiber include polyetherimide-type fibers, semi-aromatic polyamide-type fibers, polyether ether ketone-type fibers, and polycarbonate-type fibers.

Related Document

Patent Document

Patent Document 1 WO2016/152856
Patent Document 2 WO2014/021084

SUMMARY OF THE INVENTION

However, in Patent Document 1, since the fine particles of the matrix resin are adhered to the reinforcing fibers through powder coating so as to form a resin molding material, such a powder coating process for the resin molding

material has difficulty in control of the amount of the fine particles of the matrix resin with respect to the reinforcing fibers. Meanwhile, where fine particles are simply applied as a matrix resin to the reinforcing fiber, the amount of the fine particles of the matrix resin with respect to the reinforcing fiber is easily adjusted, but the fine particles of the resin easily falls off, resulting in a disadvantage in terms of handleability.

On the other hand, in Patent Document 2, the nonwoven fabric made of heat-resistant thermoplastic fibers is used as a material for a resin molded body to make the thermoplastic fibers included in the nonwoven fabric melted through heat treatment so as to obtain a molded body. However, since the thermoplastic resin constituting the thermoplastic fibers has a high heat resistance, it is necessary to increase the molding temperature for melting the resin, resulting in a disadvantage in terms of moldability.

Accordingly, an object of the present invention is to solve the above problems and to provide a fiber structure having excellent handleability and having satisfactory moldability (i.e., enabling a satisfactory crosslinked molded body to be obtained therefrom).

Another object of the present invention is to provide a heat-crosslinked molded body that can be obtained through molding at a low temperature while exhibiting heat resistance at a temperature higher than that at the time of molding.

The present inventors conducted studies from the viewpoint of solving the problems and have focused on the fact that an amorphous epoxy-type resin (or phenoxy resin) is a thermoplastic resin that is moldable at a comparatively low temperature while having therein a crosslinkable group that exists in a thermosetting resin, and then have found that (i) combinational use of an amorphous epoxy-type resin and a thermoplastic resin crosslinkable with the amorphous epoxy-type resin through heating enables to enhance strength of a molded body through a crosslinked configuration by heating even if these resins are molded as thermoplastic resins; that (ii) a fiber configuration of at least one of the resins enables a molding material to be used as a fiber structure having excellent handleability and uniform distribution the resin owing to the fiber configuration; and that (iii) such a fiber structure can be disposed depending on a desired shape before heat-crosslinking occurrence between the amorphous epoxy-type resin and the other crosslinkable resin so as to be molded through heating at a comparatively low temperature owing to the amorphous epoxy-type resin, meanwhile, the heat resistance of the obtained molded body can be improved by the heat-crosslinks. Therefore, the present inventors have completed the present invention.

Specifically, the present invention can be configured as in the following aspects.

Aspect 1

A fiber structure comprising at least a thermoplastic resin A and a thermoplastic resin B both being heat-crosslinkable with each other,

the thermoplastic resin A being an amorphous epoxy-type resin; and
at least one of the thermoplastic resins A and B having a fiber shape.

Aspect 2

The fiber structure according to aspect 1, wherein each of the thermoplastic resins A and B has a fiber shape.

Aspect 3

The fiber structure according to aspect 1 or 2, wherein the thermoplastic resin A comprises an amorphous epoxy-type fiber having a birefringence value of 0.005 or less (preferably 0.004 or less, more preferably 0.003 or less, and further preferably 0.002 or less).

Aspect 4

The fiber structure according to any one of aspects 1 to 3, wherein a weight ratio of the thermoplastic resin A with respect to the thermoplastic resin B (A/B) is from 30/70 to 90/10 (preferably from 35/65 to 79/21 and more preferably from 40/60 to 70/30).

Aspect 5

The fiber structure according to any one of aspects 1 to 4, wherein the fiber structure is a nonwoven fabric.

Aspect 6

The fiber structure according to any one of aspects 1 to 5, wherein the thermoplastic resin A has a glass transition temperature which is lower than a softening point of the thermoplastic resin B, and the temperature difference between them is 40°C or higher (preferably 50°C or higher and further preferably 55°C or higher).

Aspect 7

The fiber structure according to any one of aspects 1 to 6, wherein the thermoplastic resin B comprises a polycarbonate-type resin.

Aspect 8

The fiber structure according to any one of aspects 1 to 7, further comprising reinforcing fibers.

Aspect 9

The fiber structure according to aspect 8, wherein a weight ratio of a total amount of the thermoplastic resin A and the thermoplastic resin B with respect to the reinforcing fibers is from 70/30 to 25/75 (preferably from 60/40 to 35/65 and more preferably from 55/45 to 45/55).

Aspect 10

The fiber structure according to aspect 8 or 9, wherein at least one of the thermoplastic resins A and B has a fiber shape having a fiber diameter which is from 5 to 3500 (preferably from 30 to 2000 and more preferably from 80 to 500) when the reinforcing fibers are regarded to have a fiber diameter of 100.

Aspect 11

The fiber structure according to any one of aspects 1 to 10, wherein the fiber structure has an elongation of 1% or higher (preferably 4% or higher and more preferably 10% or higher).

Aspect 12

A method for manufacturing a crosslinked molded body at least comprising:

preparing the fiber structure recited in any one of aspects 1 to 11, and
heat-molding the prepared fiber structure as one layer or an overlaid material comprising two or more of the prepared fiber structures at a temperature equal to or higher than a flow starting temperature of each of the thermoplastic resins A and B.

Aspect 13

The method according to aspect 12, wherein the prepared fiber structure is heat-molded using a mold having a three-dimensional shape in the heat-molding.

Aspect 14

The method according to aspect 12 or 13, wherein the heat-molding is performed by a heat treatment at a heating temperature of 300°C or lower (preferably 280°C or lower, more preferably 250°C or lower, and further preferably 230°C or lower).

Aspect 15

The method according to aspect 14, further comprising performing cooling at a temperature of from (HT - 80) to (HT - 0)°C which is 0 to 80°C lower than the heating temperature HT of the heat-molding (preferably at a temperature (HT - 60)°C or higher and more preferably (HT - 30)°C or higher).

Aspect 16

A crosslinked molded body of the fiber structure according to any one of aspects 1 to 11, wherein the crosslinked molded body has a load deflection temperature of 250°C or higher (preferably 280°C or higher and more preferably 300°C or higher).

Aspect 17

The crosslinked molded body according to aspect 16, wherein the crosslinked molded body has a region of a complicated shape.

Any combination of at least two constituents, disclosed in the appended claims and/or the specification and/or the accompanying drawings should be construed as included within the scope of the present invention. In particular, any combination of two or more of the appended claims should be equally construed as included within the scope of the present invention.

The fiber structure according to the present invention not only has excellent handleability owing to the fiber configuration but also allows the resins in the fiber structure to flow upon heating so as to be advantageously capable of forming a complicated shape. Furthermore, where the fiber structure including the resins heat-crosslinkable with each other is heated to be formed as a molded body, it is possible to perform molding while causing a crosslinking reaction between the resins in the fiber structure through heating. Moreover, since the molded body results from heat-crosslinking the resins with each other, the molded body has an improved strength, and excellent heat resistance even where the molded body is subjected to a temperature higher than the molding temperature.

DESCRIPTION OF EMBODIMENTS

A fiber structure according to the present invention includes at least a thermoplastic resin A and a thermoplastic resin B both heat-crosslinkable with each other, and the thermoplastic resin A is an amorphous epoxy-type resin.

Thermoplastic Resin A

The thermoplastic resin A, i.e., the amorphous epoxy-type resin, used in the present invention may be a thermoplastic resin that can be obtained through a condensation reaction between a dihydric phenol compound and an epihalohydrin (for example, epichlorohydrin) or a polyaddition reaction between the dihydric phenol compound and a difunctional epoxy compound.

Examples of the dihydric phenol compound as a raw material of the amorphous epoxy-type resin can include hydroquinone, resorcin, 4,4'-dihydroxybiphenyl, 4,4'-dihydroxydiphenyl ketone, 2,2-bis(4-hydroxyphenyl)propane [bisphenol A], 1,1-bis(4-hydroxyphenyl)cyclohexane, 1,1-bis(4-hydroxyphenyl)-3,3,5-trimethylcyclohexane, bis(4-hydroxyphenyl)methane [bisphenol F], 1,1-bis(4-hydroxyphenyl)ethane, 2,2-bis(4-hydroxyphenyl)butane, 1,1-bis(4-hydroxyphenyl)-1-phenylethane, bis(4-hydroxyphenyl)diphenylmethane, 2,2-bis(4-hydroxy-3-methylphenyl)propane, 2,2-bis(3-phenyl-4-hydroxyphenyl)propane, 2,2-bis(4-hydroxy-3-tert-butylphenyl)propane, 1,3 -bis(2-(4-hydroxyphenyl)propyl)benzene, 1,4-bis(2-(4-hydroxyphenyl)propyl)benzene, 2,2-bis(4-hydroxyphenyl)-1,1,1,3,3,3-hexafluoropropane, 9,9-bis(4-hydroxyphenyl)fluorene, and bis(4-hydroxyphenyl)sulfone [bisphenol S] and others. These dihydric phenol compounds may be used singly, or two or more types of these dihydric phenol compounds may be used in combination. As the dihydric phenol compound, it is preferable to use a bisphenol, and specifically, it is more preferable to use at least one type of dihydric phenol compound selected from the group consisting of bisphenol A, bisphenol F, and bisphenol S.

Examples of the difunctional epoxy compound as a raw material of the amorphous epoxy-type resin can include an epoxy oligomer obtained through a condensation reaction between the above dihydric phenol compound and an epihalohydrin., for example, hydroquinone diglycidyl ether, resorcin diglycidyl ether, bisphenol S epoxy resins, bisphenol A epoxy resins, bisphenol F epoxy resins, methylhydroquinone diglycidyl ether, chlorohydroquinone diglycidyl ether, 4,4'-dihydroxydiphenyl oxide diglycidyl ether, 2,6-dihydroxynaphthalene diglycidyl ether, dichlorobisphenol A diglycidyl ether, tetrabromobisphenol A epoxy resins, and 9,9-bis(4-hydroxyphenyl)fluorene diglycidyl ether. These difunctional epoxy compounds may be used singly, or two or more types of these difunctional epoxy compounds may be used in combination. As the difunctional epoxy compound, it is more preferable to use at least one type of difunctional epoxy compound selected from the group consisting of bisphenol A epoxy resins and bisphenol F epoxy resins.

The amorphous epoxy-type resin can be manufactured in the absence of a solvent or in the presence of a reaction solvent. As the reaction solvent, it is possible to suitably use an aprotic organic solvent, for example, methyl ethyl ketone, dioxane, tetrahydrofuran, acetophenone, N-methylpyrrolidone, dimethyl sulfoxide, N,N-dimethylacetamide, sulfolane, and other solvents. The amorphous epoxy-type resin obtained through a solvent reaction can be subjected

to solvent removal processing using an evaporator or the like, to be made into a solid resin free from solvent.

The production process of the amorphous epoxy-type resin can employ a conventionally known polymerization catalyst. For example, it is possible to suitably use an alkali metal hydroxide, a tertiary amine compound, a quaternary ammonium compound, a tertiary phosphine compound, a quaternary phosphonium compound, or the like.

An amorphous epoxy-type fiber according to the present invention may include an amorphous epoxy-type resin represented by the following formula.

Chem. 1

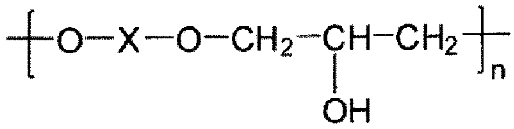

In the formula, X may be a dihydric phenol residue, and n may be 20 or more. The dihydric phenol residue may have a chemical structure derived from the above dihydric phenol compound and may include one or more types of chemical structures. For example, X may have a chemical structure derived from at least one type of dihydric phenol compound selected from the group consisting of bisphenol A, bisphenol F, and bisphenol S. n represents an average degree of polymerization and may fall within, for example, a range from 20 to 300, preferably a range from 40 to 280, and more preferably a range from 50 to 250.

In addition, the amorphous epoxy-type resin may have, at a terminal thereof, a functional group such as a hydroxy group (for example, a phenolic hydroxy group) or an epoxy group.

In the present invention, whether a sample is "amorphous" can be determined according to presence/absence of an endothermic peak when the temperature of the sample is increased at an elevation rate of 10°C/min in the presence of nitrogen using a differential scanning calorimeter (DSC). In the case where the endothermic peak is very broad and no endothermic peak can be clearly determined, the sample is at a level where no problem arises in actual use. Thus, such a sample may be determined as being substantially amorphous.

The amorphous epoxy-type resin may have a weight-average molecular weight that can be selected as appropriate depending on the shape and that can be selected from within, for example, a broad range from 10000 to 200000. In the case where the amorphous epoxy-type resin is made into fibers, the weight-average molecular weight of the amorphous epoxy-type resin may be from about 10000 to 100000, preferably from about 20000 to 90000, and more preferably from about 30000 to 80000 from the viewpoint of improving spinnability. The weight-average molecular weight of the amorphous epoxy-type resin can be calculated in terms of polystyrene using gel permeation chromatography (GPC).

The amorphous epoxy-type resin may have a glass transition temperature (hereinafter, sometimes referred to as Tg) that may be 100°C or lower, preferably 98°C or lower, and more preferably 95°C or lower from the viewpoint of moldability. The lower limit of the glass transition temperature of the amorphous epoxy-type resin is not particularly limited, and the glass transition temperature may be, for example, 30°C or higher, preferably 50°C or higher, and more preferably 60°C or higher from the viewpoint of the heat resistance of a molded body to be obtained. The glass transition temperature of the amorphous epoxy-type resin is measured using differential scanning calorimetry (DSC). The amorphous epoxy-type resin may have a melt viscosity of, for example, from 600 to 4000 poise, preferably from 700 to 3000 poise, and more preferably from 800 to 2000 poise at 300°C and at a shear velocity of 1000 $sec^{-1}$.

The amorphous epoxy-type resin may have a fiber shape or a powder shape, may be a solution or an emulsion comprising the amorphous epoxy-type resin and a solvent or a dispersion medium, or may be a combination of these forms as long as the fiber structure according to the present invention can be formed.

For example, the amorphous epoxy-type resin having a powder shape can be obtained by pulverizing a raw material resin with a known pulverizer to have a desired average particle diameter, and the average particle diameter may be, for example, from 10 to 100 μm, preferably from 20 to 80 μm, and more preferably from 30 to 60 μm. The average particle diameter is a value measured depending on a method explained in EXAMPLES described later.

Out of these forms, the amorphous epoxy-type resin preferably may have a fiber shape, and fibers will be described in detail below.

Amorphous Epoxy-Type Fiber

The amorphous epoxy-type fiber is not particularly limited as long as the amorphous epoxy-type fiber is formed of the amorphous epoxy-type resin, and can have any of various fiber diameters depending on the shape of the intended fiber structure. The amorphous epoxy-type fiber may have an average single fiber diameter, i.e., average fiber diameter of single fibers, that may be, for example, 40 μm or smaller, preferably 38 μm or smaller, and more preferably 35 μm

or smaller.

For example, in the case where the amorphous epoxy-type fiber is used as a material for forming a matrix resin which is a composite material additionally including reinforcing fibers, the amorphous epoxy-type fibers with the average single fiber diameter to fall within the above range can be advantageously used in mixing with the reinforcing fibers. Further, the lower limit value of the average single fiber diameter is not particularly limited, for example, the average fiber diameter may be 1 μm or larger, preferably 3 μm or larger, more preferably 5 μm or larger, further preferably 10 μm or larger, even more preferably 15 μm or larger, and particularly preferably 20 μm or larger. In the case where the cross-sectional shape of the fiber is not a perfect circle, the average single fiber diameter may be a value measured as the diameter of a circumcircle circumscribed around the cross-sectional shape of the fiber. The average fiber diameter is a value measured as in EXAMPLES described later.

The total fineness of the amorphous epoxy-type fiber can be adjusted as appropriate depending on use or the like, and may be, for example, from 1 to 10000 dtex, preferably from 10 to 5000 dtex, more preferably from 50 to 3000 dtex, and further preferably from 100 to 1500 dtex.

The number of filaments of the amorphous epoxy-type fiber can be adjusted as appropriate depending on use or the like. The amorphous epoxy-type fiber may be a monofilament or a multifilament. In the case of a multifilament, the number of the filaments may be, for example, from 5 to 3000, preferably from 10 to 2000, more preferably from 30 to 1500, and further preferably from 50 to 500.

The amorphous epoxy-type fiber may be a continuous fiber or a discontinuous fiber depending on the shape of the fiber structure. The amorphous epoxy-type fiber may be a crimped fiber or a non-crimped fiber. In the case where the fiber structure is a nonwoven fabric, the amorphous epoxy-type fiber is cut into an appropriate length depending on the type of the nonwoven fabric.

In the case of a discontinuous fiber, the average fiber length of the amorphous epoxy-type fiber may be, for example, from 3 to 80 mm, preferably from 7 to 70 mm, and more preferably from 15 to 60 mm. In the case where the amorphous epoxy-type fiber may have such an average fiber length, intertwining between fibers can be suppressed, whereby excellent process passability is attained at the time of mixing.

The amorphous epoxy-type fiber may preferably have a birefringence value of 0.005 or less. Here, the birefringence value is an index of the molecular orientation state of the amorphous epoxy-type resin, and a smaller birefringence value indicates a lower molecular orientation degree with respect to a fiber axial direction. Such an amorphous epoxy-type fiber is preferable since the amorphous epoxy-type fiber makes it possible to attain heat-crosslinkability while decreasing the shrinkability at a high temperature. The birefringence value of the amorphous epoxy-type fiber may be preferably 0.004 or less, more preferably 0.003 or less, and further preferably 0.002 or less. Meanwhile, the lower limit of the birefringence value is not particularly limited and may be, for example, about 0.0001. The birefringence value is a value measured depending on a method explained in EXAMPLES described later.

The amorphous epoxy-type fiber can be obtained by melt-spinning the amorphous epoxy-type resin. A known melt-spinning apparatus can be used for melt-spinning the amorphous epoxy-type resin. For example, pellets of the amorphous epoxy-type resin are melt-kneaded using a melt-extruder to obtain a molten polymer, and then the molten polymer is fed to a spinning tube. Then, the molten polymer is metered by a gear pump to discharge a predetermined amount from a spinning nozzle, and discharged filaments are wound up to produce the amorphous epoxy-type fiber according to the present invention.

In particular, in the case of obtaining an amorphous epoxy-type fiber having a birefringence value of 0.005 or less, the melt viscosity at a spinning temperature is preferably decreased in a spinning step. For example, the spinning temperature may be adjusted such that the melt viscosity is from 600 to 4000 poise at the spinning temperature at a shear velocity of 1000 $sec^{-1}$. The melt viscosity may be preferably from 700 to 3000 poise and more preferably from 800 to 2000 poise. The spinning temperature may be, for example, from 250 to 330°C, preferably from 260 to 320°C, and more preferably from 280 to 315°C.

The discharging speed from the spinning nozzle can be set as appropriate depending on the viscosity of the molten polymer at the spinning temperature, the hole diameter of the nozzle, and the discharging amount, and, where the discharging speed is set to be comparatively low, shear stress to be applied to the molten polymer in the nozzle can be decreased. The discharging speed may be, for example, in a range from 2.54 to 42.4 m/min, preferably from 4.24 to 33.9 m/min, and more preferably from 4.24 to 25.4 m/min.

The spinning speed (winding speed) in this case can be set as appropriate depending on the viscosity of the molten polymer at the spinning temperature, the hole diameter of the nozzle, and the discharging amount, and, where the winding speed is set to be comparatively low, the orientation degree of the fiber can be decreased. For example, the winding speed at which the discharged filament is wound is preferably in a range from 100 to 2000 m/min, and may be more preferably from 100 to 1500 m/min, further preferably from 100 to 1000 m/min, particularly preferably from 100 to 750 m/min, and most preferably from 100 to 500 m/min.

In a method for producing the amorphous epoxy-type fiber according to the present invention, the fiber resulting from the melt-spinning may be directly used as an undrawn fiber. Alternatively, the method may include a drawing step

of drawing the fiber obtained in the spinning step from the viewpoint of, for example, adjusting the fiber diameter thereof as long as the amorphous epoxy-type fiber may have the specific birefringence value.

The drawing temperature is preferably from (Tg - 30) to (Tg + 20)°C relative to the glass transition temperature (Tg) of the amorphous epoxy-type resin. The drawing ratio for the yarn discharged from the spinning nozzle may be set to be as low as possible (for example, a drawing ratio of from about 1.01 to 1.3 and preferably from about 1.01 to 1.2) from the viewpoint of adjustment of the birefringence value of the amorphous epoxy-type fiber. Meanwhile, the drawing ratio may be set depending on the drawing temperature in consideration of achieving both said adjustment and adjustment of the fiber diameter. For example, the drawing ratio at a drawing temperature of (Tg - 30)°C or higher and lower than (Tg - 20)°C is preferably from 1.01 to 1.2, the drawing ratio at a drawing temperature of (Tg - 20)°C or higher and lower than Tg°C is preferably from 1.01 to 1.4, and the drawing ratio at a drawing temperature of Tg°C or higher and (Tg + 20)°C or lower is preferably from 1.01 to 1.7.

Thermoplastic Resin B

The thermoplastic resin B has a functional group that is crosslinkable, through heating, with the thermoplastic resin A which is an amorphous epoxy-type resin. The thermoplastic resins, contrary to thermosetting resins, generally do not cause crosslinking reaction where different types of thermoplastic resins are melted by heating.

However, the amorphous epoxy-type resin, despite the fact that the amorphous epoxy-type resin is a thermoplastic resin, is capable of causing crosslinking reaction, which is similar to that in a thermosetting resin, with another thermoplastic resin having a functional group that reacts with the secondary hydroxyl group, probably because the amorphous epoxy-type resin has a secondary hydroxyl group therein. In this case, heating makes it possible to not only melt at least one of the thermoplastic resins but also cause a crosslinking reaction between both thermoplastic resins so that the heat resistance of the molded body resulting from the crosslinking reaction can be improved.

Occurrence of a crosslinking reaction between the thermoplastic resins A and B can be determined by confirming, for example, (i) whether the molded body resulting from the crosslinking reaction is neither melted nor deformed and the form thereof is maintained even when the molded body is heated at a temperature equal to or higher than the glass transition temperature of a resin having a higher glass transition temperature out of the thermoplastic resins A and B, (ii) whether a load deflection temperature described in EXAMPLES is equal to or higher than the aforementioned glass transition temperature, or the like. Alternatively, occurrence of the crosslinking reaction can be determined by confirming (iii) whether the melt viscosity of the molded body has been increased at a predetermined high temperature. Further, occurrence of the crosslinking reaction can be determined by confirming (iv) whether the expansion rate (for example, the rate of change in the thickness direction) during heating at a temperature equal to or higher than the aforementioned glass transition temperature has become lower than that of a molded body that has not experienced any crosslinking. This criterion (iv) is applicable because, although presence of reinforcing fibers that can exhibit expansion properties might lead to expansion of a molded body owing to repulsive force of the fibers at a high temperature, the crosslinked molded body according to the present invention enables decrease in the expansion properties owing to the crosslinked configuration of the resins. Presence or absence of the crosslinking reaction can be confirmed by, for example, at least one of the criteria (i) to (iv).

The thermoplastic resin B can cause a crosslinking reaction between the thermoplastic resins A and B. The thermoplastic resin B may have a fiber shape or a powder shape, may be a solution or an emulsion comprising the thermoplastic resin B and a solvent or a dispersion medium, or may be a combination of these forms.

A thermoplastic resin B having a powder shape can be obtained by pulverizing a raw material resin with a known pulverizer to have a desired average particle diameter, and the average particle diameter may be, for example, from 10 to 100 μm, preferably from 20 to 80 μm, and more preferably from 30 to 60 μm. The average particle diameter is a value measured as in EXAMPLES described later.

Out of these forms, the thermoplastic resin B preferably has a fiber shape, and fibers will be described in detail below.

The fiber formed of the thermoplastic resin B (hereinafter, abbreviated as fiber B) can have any of various fiber diameters depending on the type of the resin and the shape of the intended fiber structure. The average fiber diameter of single fibers of the fiber B may be, for example, equivalent to that of the amorphous epoxy-type fiber. In the case where the cross-sectional shape of the fiber is not a perfect circle, the average single fiber diameter may be a value measured as the diameter of a circumcircle circumscribed around the cross-sectional shape of the fiber. The average fiber diameter is a value measured as in EXAMPLES described later.

Meanwhile, there is the case where the thermoplastic resin A is formed as an amorphous epoxy-type fiber having a comparatively large fiber diameter. In this case, in consideration of facilitation of mixing or the like, the average single fiber diameter of the fiber B is preferably smaller than the average fiber diameter of the amorphous epoxy-type fiber. Specifically, the average single fiber diameter of the fiber B may be, for example, 35 μm or smaller, preferably 30 μm or smaller, and more preferably 20 μm or smaller. Meanwhile, regarding the lower limit value of the average single

fiber diameter of the fiber B, the average fiber diameter may be, for example, 1 μm or larger, preferably 3 μm or larger, more preferably 5 μm or larger, further preferably 10 μm or larger, even more preferably 12 μm or larger, and particularly preferably 15 μm or larger.

The total fineness of the fiber B can be adjusted as appropriate depending on use or the like, and may be, for example, from 1 to 10000 dtex, preferably from 10 to 5000 dtex, more preferably from 50 to 3000 dtex, and further preferably from 100 to 1500 dtex.

The number of filaments of the fiber B can be adjusted as appropriate depending on use or the like. The fiber B may be a monofilament or a multifilament. In the case of a multifilament, the number of the filaments may be, for example, from 5 to 3000, preferably from 10 to 2000, more preferably from 30 to 1500, and further preferably from 50 to 500.

The fiber B may be a continuous fiber or a discontinuous fiber depending on the shape of the fiber structure. The fiber B may be a crimped fiber or a non-crimped fiber. In the case where the fiber structure is a nonwoven fabric, the fiber B is cut into an appropriate length depending on the type of the nonwoven fabric.

In the case of a discontinuous fiber, the average fiber length of the fiber B may be, for example, from 3 to 80 mm, preferably from 7 to 70 mm, and more preferably from 15 to 60 mm. In the case where the fiber B has such an average fiber length, intertwining between fibers can be suppressed, whereby excellent process passability is attained at the time of mixing.

From the viewpoint of improving the heat resistance, the softening point of the thermoplastic resin B is preferably higher than the glass transition temperature of the thermoplastic resin A. Here, in the case where the thermoplastic resin B is a crystalline resin, the softening point refers to a melting point, and meanwhile, in the case where the thermoplastic resin B is an amorphous resin, the softening point refers to a glass transition temperature. The difference between the softening point of the thermoplastic resin B and the glass transition temperature of the thermoplastic resin A may be, for example, 40°C or larger, more preferably 50°C or larger, and further preferably 55°C or larger. The glass transition temperature of the thermoplastic resin A and the softening point of the thermoplastic resin B can be set as appropriate as long as these resins are heat-crosslinkable with each other. For example, the difference between the softening point of the thermoplastic resin B and the glass transition temperature of the thermoplastic resin A may be 200°C or smaller.

The thermoplastic resin B is not particularly limited as long as a heat-crosslinking reaction, e.g., transesterification reaction, with the thermoplastic resin A can be caused. Examples of the thermoplastic resin B include a resin having an electron-attracting functional group such as a carbonate group, an aldehyde group, a ketone group, or an ester group, the resin being exemplified by a polycarbonate-type resin.

Polycarbonate-Type Resin

The polycarbonate-type resin used in the present invention is a polymer containing a repeating unit represented by the following formula and is not particularly limited as long as the polycarbonate-type resin has melt-moldability.

Chem. 2

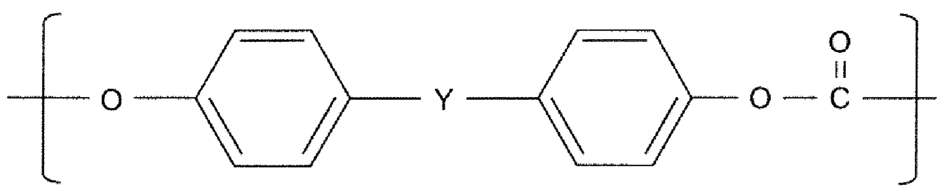

In the formula, Y may be a direct bond, an alkylene group having 1 to 8 carbon atoms, an alkylidene group having 2 to 8 carbon atoms, a cycloalkylene group having 5 to 15 carbon atoms, a cycloalkylidene group having 5 to 15 carbon atoms, an oxygen atom, a sulfur atom, -CO-, -SO-, or $-SO_2-$.

The polycarbonate-type resin preferably has a bisphenol A backbone with Y being a methylene group. For example, the proportion (molar ratio) of the bisphenol A backbone with respect to the entirety of the monomer unit in the polycarbonate-type resin may be 65% or higher and preferably 75% or higher. In addition, although the polycarbonate-type resin may have a branched chain, a branching degree thereof is preferably lower than 0.1 mol%.

The polycarbonate-type resin used in the present invention may have a weight-average molecular weight that can be selected as appropriate depending on the shape and that can be selected from within, for example, a range from 10000 to 100000. In the case where the polycarbonate-type resin is made into fibers, the weight-average molecular

weight of the polycarbonate-type resin may be from about 25000 to 80000, preferably from about 35000 to 65000, and more preferably from about 45000 to 55000 from the viewpoint of improving spinnability. The weight-average molecular weight of the polycarbonate-type resin can be calculated in terms of polystyrene through gel permeation chromatography (GPC).

The polycarbonate-type resin may have a glass transition temperature (hereinafter, sometimes referred to as Tg) that may be 200°C or lower, preferably 190°C or lower, and more preferably 180°C or lower from the viewpoint of moldability. The lower limit of the glass transition temperature of the polycarbonate-type resin is not particularly limited, and the glass transition temperature may be 135°C or higher, preferably 140°C or higher, and more preferably 145°C or higher. The glass transition temperature of the polycarbonate-type resin is measured through differential scanning calorimetry (DSC).

The polycarbonate-type resin may have a melt viscosity at 320°C and at a shear velocity of 1000 $sec^{-1}$. The melt viscosity may be, for example, from 600 to 4000 poise and more preferably from 800 to 3000 poise.

The polycarbonate-type resin may have a melt flow rate (MFR) measured depending on ISO1183. The MFR may be, for example, from 8 to 35 g/10 min and more preferably from 11 to 18 g/10 min.

Out of these forms, the thermoplastic resin B preferably has a fiber shape, and the thermoplastic resin B is more preferably a polycarbonate-type fiber and is particularly preferably a polycarbonate-type fiber having an orientation degree lower than 0.70. The polycarbonate-type fiber having such an orientation degree is preferable since the polycarbonate-type fiber makes it possible to attain heat-crosslinkability while decreasing the shrinkability at a high temperature. Here, the orientation degree can be obtained as an orientation degree ft depending on the following equation.

$$ft=1-(Cu/C)^2$$

Cu: the value of the speed of sound in a non-oriented PC-type polymer (km/sec)

In the present invention, Cu is set to 1.0.

C: actually measured speed of sound (km/sec)

The orientation degree may be preferably 0.68 or lower, more preferably 0.65 or lower, further preferably 0.62 or lower, and particularly preferably 0.61 or lower. The lower limit value of the orientation degree is not particularly limited, and the orientation degree may be 0.1 or higher.

The polycarbonate-type fiber can be obtained by melt-spinning the polycarbonate-type resin. A known melt-spinning apparatus can be used for melt-spinning the polycarbonate-type resin. For example, pellets of the polycarbonate-type resin are melt-kneaded using a melt-extruder to obtain a molten polymer, and then the molten polymer is fed to a spinning tube. Then, the molten polymer is metered by a gear pump to discharge a predetermined amount of the molten polymer from a spinning nozzle, and the discharged filaments are wound up to produce the polycarbonate-type fiber.

For example, a method for producing the polycarbonate-type fiber may include: a melt-kneading step of obtaining molten polymer by melt-kneading the polycarbonate-type resin at a high temperature (for example, 305°C or higher, preferably 310°C or higher, and further preferably 3 15°C or higher, and meanwhile, lower than the decomposition temperature of the resin); an discharging step of discharging the molten polymer by a predetermined amount from a spinning nozzle; and a winding step of winding up the discharged filament (or as-spun filament) at a predetermined winding speed (or spinning speed).

More specifically, a known melt-spinning apparatus can be used for melt-spinning the polycarbonate-type fiber. For example, pellets of the polycarbonate-type resin are melt-kneaded with a melt-extruder, and the resultant molten polymer is fed to a spinning tube. Then, with measure-out from the molten polymer being performed by a gear pump, a predetermined amount of the molten polymer is discharged from a spinning nozzle, and the obtained yarn is wound.

The discharging speed from the spinning nozzle can be set as appropriate depending on the viscosity of the molten polymer at the spinning temperature, the hole diameter of the nozzle, and the discharging amount, and, where the discharging speed is set to be comparatively low, shear stress to be applied to the molten polymer in the nozzle can be decreased.

For example, the size of a spinning hole (single hole) in a spinneret may be from about 0.02 to 1 $mm^2$, preferably from about 0.03 to 0.5 $mm^2$, and more preferably from about 0.05 to 0.15 $mm^2$. The shape of the spinning hole can be selected as appropriate depending on the necessary cross-sectional shape of the fiber.

For example, the discharging speed from the spinning nozzle can be set as appropriate depending on the number of holes of the nozzle and the diameter of each of the holes, and may be, for example, from about 10 to 300 g/min and preferably from about 20 to 280 g/min.

The spinning speed (winding speed) in this case can be set as appropriate depending on the viscosity of the molten polymer at the spinning temperature, the hole diameter of the nozzle, and the discharging amount, and, where

the winding speed is set to be comparatively low, the orientation degree of the fiber can be decreased. For example, winding is preferably performed at a speed in range from 500 to 4000 m/min. The speed may be more preferably from 600 to 3000 m/min and further preferably from 800 to 2500 m/min.

In the method for producing the polycarbonate-type fiber, the fiber resulting from the melt-spinning may be directly used as an undrawn filament, or the as-spun filaments discharged from the spinning nozzle may be drawn with a drawing ratio as low as possible (for example, a drawing ratio of from about 1.01 to 1.3 and preferably from about 1.01 to 1.2).

Fiber Structure

The fiber structure according to the present invention comprises thermoplastic resins A and B, at least one of which has a fiber shape, and both of the thermoplastic resins A and B preferably have a fiber shape.

The shape of the fiber structure according to the present invention can be set as appropriate depending on use. For example, the fiber structure may be a filamentary body such as a string-shaped object or a rope-shaped object, or any type of fabric such as a nonwoven fabric, a woven fabric, or a knitted fabric. The nonwoven fabric may be a dry-laid nonwoven fabric or a wet-laid nonwoven fabric.

In the case where the fiber structure is a fabric such as a nonwoven fabric, woven fabric, or a knitted fabric, the basis weight of the fabric may be from 10 to 1500 g/m$^2$, preferably from 30 to 1100 g/m$^2$, and more preferably from 50 to 700 g/m$^2$.

The dry-laid nonwoven fabric may be obtained by mechanically threedimensionally entangling a web, made from a predetermined fiber, through a hydroentangling process, a needle punching process, or the like.

In the case of the dry-laid nonwoven fabric, the basis weight of the fiber structure may be, for example, from 200 to 1500 g/m$^2$, preferably from 300 to 1100 g/m$^2$, and more preferably from 400 to 700 g/m$^2$.

The wet-laid nonwoven fabric may be obtained by making a slurry that contains the fiber and a solvent and then subjecting the slurry to an ordinary papermaking step.

In the case of the wet-laid nonwoven fabric, the basis weight of the fiber structure may be, for example, from 10 to 300 g/m$^2$, preferably from 30 to 250 g/m$^2$, and more preferably from 50 to 150 g/m$^2$.

In addition to the thermoplastic resin A and the thermoplastic resin B constituting the fiber structure, the fiber structure may contain a component other than these thermoplastic resins unless the advantageous effects according to the present invention are impaired. Examples of such a component other than the thermoplastic resin B may include an antioxidant, a heat stabilizer, a plasticizer, an antistatic agent, a radical inhibitor, a delusterant, an ultraviolet absorber, a flame retardant, a dye, a pigment, and another polymer.

The content ratio of the thermoplastic resin A with respect to the thermoplastic resin B in the fiber structure can be set as appropriate depending on the types of the resins, use of the fiber structure, and the like, and the weight ratio of the thermoplastic resin A with respect to the thermoplastic resin B, i.e., (thermoplastic resin A)/( thermoplastic resin B), may be, for example, from 30/70 to 90/10, preferably from 35/65 to 79/21, and more preferably from 40/60 to 70/30. Where the content ratio of the thermoplastic resin A with respect to the thermoplastic resin B falls within the above range, the crosslinking density of the crosslinked molded body is sufficiently increased, whereby a more excellent heatresistance improving effect is obtained.

In the fiber structure, other fibers may be further combined unless the advantageous effects according to the present invention are impaired. For example, the fiber structure may be a combined filament yarn or a fabric in which the fiber formed of the thermoplastic resin A and/or the thermoplastic resin B has been combined with other fibers.

For example, the fiber structure may further include reinforcing fibers. The type of the reinforcing fibers used for a composite material is not particularly limited, and examples of the reinforcing fibers include at least one type selected from the group consisting of glass fibers, carbon fibers, liquid crystal polyester fibers, aramid fibers, polyparaphenylene benzobisoxazole fibers, polyparaphenylene benzobisimidazole fibers, polyparaphenylene benzobisthiazole fibers, ceramic fibers, and metal fibers from the viewpoint of the mechanical strength of the composite material to be obtained. These reinforcing fibers may be used singly, or two or more types of these reinforcing fibers may be used in combination. Among these reinforcing fibers, carbon fibers or glass fibers are preferable from the viewpoint of improving physical properties.

The reinforcing fibers may be continuous fibers or discontinuous fibers. In the case of discontinuous fibers, the average fiber length of the reinforcing fibers may be, for example, from 3 to 80 mm, preferably from 7 to 70 mm, and more preferably from 15 to 60 mm. The reinforcing fibers having such an average fiber length can improve the strength of the molded body. Furthermore, the reinforcing fibers can suppress intertwining between the fibers, and thus are excellent in process passability at the time of mixing. In addition, the reinforcing fibers having such an average fiber length can be used as reinforcing fibers that can exhibit expansion properties. The average fiber length of the reinforcing fibers in the present invention is obtained depending on a measurement method described later.

The average fiber diameter of the reinforcing fibers is not particularly limited and may be, for example, 25 μm

or smaller, preferably 20 μm or smaller, and more preferably 15 μm or smaller. Meanwhile, regarding the lower limit value of the average fiber diameter of the reinforcing fibers, the average fiber diameter may be, for example, 3 μm or larger and preferably 5 μm or larger. In a relationship with the average fiber diameter of the fibers formed of at least one of the thermoplastic resins A and B, when the reinforcing fibers are regarded to have an average fiber diameter of 100, at least one of the thermoplastic resins A and B has a fiber shape having an average fiber diameter which may be from 5 to 3500, preferably from 30 to 2000, and more preferably from 80 to 500 as a ratio based on 100 of the average fiber diameter of the reinforcing fibers. Where the average fiber diameter of the fibers formed of at least one of the thermoplastic resins A and B with respect to the average fiber diameter of the reinforcing fibers falls within the above range, such fibers can be advantageously mixed with the reinforcing fibers, whereby excellent process passability is attained.

The proportion of the reinforcing fibers in the fiber structure according to the present invention is expressed as the weight ratio of the total amount of the thermoplastic resin A and the thermoplastic resin B with respect to the reinforcing fibers in the fiber structure. That is, the proportion is expressed as (thermoplastic resin A + thermoplastic resin B)/(reinforcing fibers). This weight ratio may be, for example, from 70/30 to 25/75, preferably from 60/40 to 35/65, and more preferably from 55/45 to 45/55. Where the weight ratio regarding the reinforcing fibers is higher than the above lower limit value, the reinforcing effect due to the reinforcing fibers is improved, whereby the strength of the molded body can be further increased. Meanwhile, where the weight ratio regarding the reinforcing fibers is lower than the above upper limit value, the portion to be impregnated with the resins is increased, whereby the strength of the molded body can be further increased.

The proportion of the fibers in the fiber structure may be, for example, 80% by weight or higher, preferably 90% by weight or higher, more preferably 95% by weight or higher, and particularly preferably 100% by weight. Even where the fiber structure has a powdery substance therein, higher proportion of the fibers preferably prevents the powdery substance from falling off.

The fiber structure preferably has a high elongation. For example, the elongation at break of the fiber structure at room temperature may be 1% or higher, preferably 4% or higher, and more preferably 10% or higher. The upper limit of the elongation at break is not particularly limited and may be, for example, about 200%. A fiber structure having a high elongation has a satisfactory adaptability to a curved surface shape, and thus, is preferable. Here, the elongation at break is a value measured depending on a method explained in EXAMPLES described later.

The fiber structure according to the present invention can be effectively employed for many uses such as uses in the industrial materials field, the agricultural materials field, the civil engineering materials field, the electrical and electronic field, the optical materials field, and the aircraft/automobile/ship field, and is particularly useful as an intermediate material for obtaining a crosslinked molded body described later.

## Method for Producing Crosslinked Molded Body

The fiber structure according to the present invention is subjected to heat treatment to soften or melt the thermoplastic resin A and/or B in the fiber structure and further to cause a heat-crosslinking reaction, whereby a crosslinked molded body can be obtained.

Specifically, a method for producing the crosslinked molded body may include at least: a preparation step of preparing the fiber structure; and a heat-molding step of heating the prepared fiber structure as one layer or an overlaid material comprising two or more of the prepared fiber structures at a temperature equal to or higher than a flow starting temperature of each of the thermoplastic resins A and B.

### Preparation Step

In the preparation step, one or more desired fiber structures are prepared. In the case where each of the fiber structures includes the reinforcing fibers, a composite material reinforced with the reinforcing fibers can be obtained with only the fiber structure.

In the case of preparing a plurality of the fiber structures, fiber structures of the same type or different types may be prepared.

As necessary, one or more reinforcing fiber substrates each comprising reinforcing fibers may be prepared together with the fiber structures. Each of the reinforcing fiber substrates can be used as appropriate depending on use or the like and may be, for example, a fabric such as a woven fabric, a non-crimp fabric (NCF), a unidirectionally aligned material (UD material), a knitted fabric, or a nonwoven fabric, a tow comprising a bundle of multifilaments, a monofilament, or the like. These reinforcing fiber substrates may be used singly, or two or more types of these reinforcing fiber substrates may be used in combination. Examples of the reinforcing fibers include the reinforcing fibers described regarding the fiber structure.

In the case of preparing a plurality of the reinforcing fiber substrates, reinforcing fiber substrates of the same type or different types may be prepared.

Heat-Molding Step

The prepared fiber structure(s) is/are subjected to the heat-molding step. The heat-molding method is not particularly limited as long as at least one of the thermoplastic resins A and B in the fiber structure can form a matrix through heating, and a general molding method for molded bodies can be employed.

In the heat-molding step, the thermoplastic resins A and B are melted, and a heat-crosslinking reaction occurs at the contact interface between both resins. The crosslinking reaction is considered to lead to formation of three-dimensional crosslinks through a transesterification reaction or the like by a hydroxy group existing in the thermoplastic resin A and a carbonate group, an ester group, or the like existing in the thermoplastic resin B.

In the heat-molding step, the prepared fiber structure and, as necessary, the reinforcing fiber substrate may be heat-compressed. In other words, the molded body may be a molded body free from reinforcing fibers or a molded body including reinforcing fibers.

In the case where the molded body according to the present invention is a composite material including the reinforcing fibers, examples of the method for producing the composite material include: a producing method comprising stacking a fiber structure and a reinforcing fiber fabric (for example, reinforcing fiber woven fabric) or the like to obtain an overlaid body, and heat-molding the overlaid body; as well as a producing method comprising heat-molding a fiber structure including reinforcing fibers.

The molding method may be, for example, a method that includes performing softening through heating and obtaining a required shape with use of external stress. For example, the molding method may include a method of hot press molding, vacuum forming, air pressure forming, or the like.

In the heat-molding step, a heating board or a mold having a desired shape may be used as necessary.

The mold may have a three-dimensional shape. For example, the mold may have a curved surface shape or a recess-protrusion shape.

In addition, in the heat-molding step, draw-forming, stretch-expand forming, flanging, bend-shaping, or the like may be performed. The draw-forming is, for example, cylindrical deep draw-forming in which the value of a depth/drawing diameter ratio may be 0.5 or higher and may be 0.7 or higher.

Furthermore, in the heat-molding step, heat-molding can be performed also in a state where: a plurality of fiber structures having different specifications are stacked; or fiber structures having different specifications are separately disposed in molds having certain sizes. In some cases, molding can also be performed along with another reinforcing fiber substrate and another composite material.

The heat-molding step is not limited as long as the target resins can be softened or melted and molded into a desired shape by heating at a temperature equal to or higher than the glass transition temperature of at least one of the thermoplastic resins A and B (preferably the amorphous epoxy-type resin as the thermoplastic resin A, and more preferably both of the thermoplastic resins A and B). For example, the heating temperature may be 300°C or lower and preferably 280°C or lower. The heating temperature may be 250°C or lower and preferably 230°C or lower from the viewpoint of preventing degradation of the molded body.

At the time of heat-molding the molded body, the molding may be performed under a pressure. The pressure is also not particularly limited, but the molding is ordinarily performed under a pressure of 0.05 $N/mm^2$ or higher (for example, 0.05 to 15 $N/mm^2$). Although heat-molding period is also not particularly limited, exposure to a high temperature for a long time might lead to degradation of the polymer, and thus, ordinarily, the time is preferably 30 minutes or shorter.

After the heat-molding step, a cooling step may be performed or may be omitted. Specifically, the cooling step may be performed at, for example, a temperature of from (HT - 80) to (HT - 0)°C, which is 0 to 80°C lower than the heating temperature HT of the heat-molding step. In the case where, for example, the molded body is taken out without being cooled, i.e., the temperature is (HT - 0)°C, a pressure may be applied to the heated mold with keeping a certain temperature, and then the pressure is released at the same temperate as that during the heating treatment so as to perform a process to be retrieved.

In the case where the molded body is manufactured using the fiber structure according to the present invention, since the thermoplastic resins A and B in the fiber structure are crosslinked with each other by heating, cooling processing for decreasing the expansion properties and fluidity of the matrix resin having been subjected to the heating step can be omitted, or the cooling processing can be performed at a temperature higher than an ordinary temperature. Thus, the cooling may be performed at a temperature that is preferably (HT - 60)°C or higher and more preferably (HT - 30)°C or higher from the viewpoint of work efficiency.

Where the cooling step is omitted or is performed at a temperature higher than the ordinary temperature, the total molding processing time of the heating step and the cooling step can be shortened, and a molding cycle property can be improved. For example, in the case where the molded body is produced from the fiber structure according to the present invention, the total molding processing period of the heating step and the cooling step can be set to, for example, 20 minutes or shorter.

Crosslinked Molded Body

The crosslinked molded body according to the present invention includes at least one of the thermoplastic resins A and B as a matrix resin, and is optionally reinforced with the reinforcing fibers. Since the thermoplastic resins A and B have undergone a crosslinking reaction at the time of the heat-molding, the molded body having a crosslinked configuration (i.e., crosslinked molded body) can exhibit heat resistance at, for example, a temperature higher than the temperature at the time of the heat-molding.

For example, the crosslinked molded body may have heat resistance at 250°C and may preferably have heat resistance at 280°C. The heat resistance can be determined by heating a crosslinked molded body to be tested on a plate heater at a target temperature. Where the molded body can maintain the form thereof, the molded body is regarded to have heat resistance at this temperature.

Further, since the crosslinked molded body has excellent heat resistance, the load deflection temperature thereof also has a high value. The load deflection temperature of the crosslinked molded body may be, for example, 250°C or higher, preferably 280°C or higher, and more preferably 300°C or higher. The upper limit value of the temperature at which heat resistance is exhibited is not particularly limited, and said temperature may be 400°C or lower.

In the process for producing the molded body, the cooling step can be omitted or can be performed at a temperature higher than the ordinary temperature, whereby dimensional change of the mold due to thermal change can be suppressed. In such a case, the accuracy of the dimension of the crosslinked molded body to be obtained can be improved. For example, the accuracy of the dimension of the crosslinked molded body may be determined on the basis of a variation among a plurality of measured local thicknesses of the molded body having a fixed thickness.

The crosslinked molded body according to the present invention preferably has a density of 2.00 g/$cm^3$ or lower. The density is preferably 1.95 g/$cm^3$ or lower and more preferably 1.90 g/$cm^3$ or lower. The lower limit value of the density is determined as appropriate depending on the selected material or the like and may be, for example, about 0.1 g/$cm^3$.

The crosslinked molded body according to the present invention preferably has a thickness of 0.05 mm or larger (preferably 0.1 mm or larger). The thickness is more preferably 0.3 mm or larger and further preferably 0.5 mm or larger. Meanwhile, the upper limit of the thickness can be set as appropriate depending on a thickness required of the molded body and may be, for example, about 10 mm.

Furthermore, the crosslinked molded body according to the present invention enables to control dimensional change at a high temperature in the case where the crosslinked molded body contains reinforcing fibers having a possibility to exhibit expansion properties. In the case where such reinforcing fibers exist, the molded body might be expanded owing to repulsive force of the fibers at a high temperature, but the crosslinked molded body according to the present invention can suppress the expansion properties because of the crosslinked configuration of the resins. The crosslinked molded body according to the present invention may have a dimensional change in the thickness direction at a high temperature of, for example, 150% or lower, preferably 145% or lower, and more preferably 141% or lower, when the heat-crosslinked molded body is placed in an air-heating furnace preheated to 260°C and heated for 10 minutes. The dimensional change of the heat-crosslinked molded body is expressed as a percentage of the thickness after heating with respect to the thickness at normal temperature (25°C) (the thickness before heating).

The crosslinked molded body according to the present invention may be a structure having a one-dimensional shape (for example, a structure having a rod shape) or a structure having a two-dimensional shape (for example, a structure having a flat plate shape). However, since the crosslinked molded body can be formed via the fiber structure, the crosslinked molded body provides an increased degree of freedom in the shape thereof and is useful as a structure having a three-dimensional shape. Examples of the structure having a three-dimensional shape include a molded body resulting from deep draw-forming, a molded body resulting from stretch-expand forming, a molded body resulting from flanging, and a molded body resulting from bend-shaping, and a molded body resulting from a combination of these molded bodies. These molded bodies attain elongation derived from tensile stress, flexural stress, or the like, and thus, can be easily processed by utilizing the elongation of the fiber structure.

Furthermore, the crosslinked molded body according to the present invention may include a region of a complicated shape. The region of a complicated shape denotes a region having a three-dimensional shape in the surface direction or the thickness direction, and examples of the region include a protruding portion, a recessed portion, a curved portion, a thickness changing portion, a rib portion, and a boss portion. For example, as the protruding portion or the recessed portion, there may be exemplified a protruding portion or a recessed portion having a cross-sectional shape in which the ratio of the height of the protruding portion or the depth of the recessed portion with respect to the maximum width of the protruding portion or the recessed portion is 0.2 or higher.

Since the crosslinked molded body according to the present invention can be formed to have the complicated shape, the crosslinked molded body is suitably used as, for example: a part or a housing for personal computers, displays, OA devices, mobile phones, mobile information terminals, digital video cameras, optical devices, audio devices, air conditioners, lighting devices, toys, household electrical appliances, electric/electronic device parts, other electric/electronic device products, or the like; a part for civil engineering/building materials, such as an interior member, an exterior member, a supporting column, a panel, or a reinforcing member; any type of member, any type of frame, any type of hinge, any type of arm, any type of axle, any type of wheel bearing, any type of beam, any type of pillar, any type of support, or any type of rail for vehicles (bicycles, automobiles, two-wheeled vehicles, ships, aircraft, or the like); an interior part for vehicles, such as an instrument panel, a seat frame, a door trim, a pillar trim, a steering wheel, or any type of module; an exterior part for vehicles, such as a chassis, a tray, a shell plating, a body part, a bumper, a molding, an underbody cover, an engine cover, a deflector, a spoiler, a cowl louver, or an aerodynamic part; a part of a fuel system, an exhaust system, or an intake system for vehicles, such as a motor part, a CNG tank, a gasoline tank, a fuel pump, an air intake, an intake manifold, a carburetor main body, a carburetor spacer, any type of pipe, or any type of valve; a part for drones and aircraft, such as a landing gear pod, a winglet, a spoiler, an edge, a rudder, an elevator, a fairing, or a rib; an article for sports and leisure, such as a racket or a fishing rod; or the like.

## EXAMPLES

The present invention will be described in more detail below by means of examples, but the present invention is not limited to these examples in any manner. In the following examples, various physical properties are indicated as values measured depending on the following methods.

### Birefringence Value

A birefringence value was calculated depending on the following equation from a retardation measured under a light source at $\lambda$=546.1 nm (e-line), using a polarizing microscope "BX53" (manufactured by Olympus Corporation) equipped with a Berek compensator. A fiber thickness indicates a fiber diameter.
$\Delta n = R/d$

$\Delta n$: birefringence value
R: retardation (nm)
d: fiber thickness (nm)

### Orientation Degree

An overall molecular orientation degree was obtained from a speed of sound. The speed of sound was measured using DDV-5-B manufactured by Rheovibron. A bundle of fibers having a fiber length of 50 cm was fixed to the device, and a load of 0.1 g/dtex was applied to the bundle of fibers. Then, sonic wave propagation speeds were measured at respective points at which the distances from a sound source to a detector were 50, 40, 30, 20, and 10 cm. Then, a speed of sound was obtained from the relationship between the distance and the propagation time (n=5).
After the speed of sound serving as an index of the overall molecular orientation degree was measured, an orientation degree ft was obtained depending on the following equation.

$$ft = 1 - (Cu/C)^2$$

Cu: the value of the speed of sound in a non-oriented PC-type polymer (km/sec)
In the present invention, Cu was set to 1.0.
C: actually measured speed of sound (km/sec)

### Average Fiber Length

The fiber lengths of respective 100 fibers having been randomly selected were measured, and the average value of the fiber lengths was obtained as an average fiber length.

### Average Fiber Diameter ($\mu$m)

A zoom-in image was taken at a predetermined magnification using a scanning electron microscope (SEM), and the average value of the values of the measured diameters of 100 fibers having been randomly selected was obtained as an average fiber diameter.

Average Particle Diameter (μm)

Using a laser diffraction/scattering type particle size distribution measurement device (LA-950V2 manufactured by HORIBA, Ltd.), laser light was applied to a particle group, a particle size distribution was obtained through calculation from an intensity distribution pattern of diffracted/scattered light generated from the particle group, and an average particle diameter was calculated.

Glass Transition Temperature Tg (°C) and Melting Point (°C)

The glass transition temperature and the melting point of each of resins were measured through increase of the temperature of the sample to 350°C at a temperature increase rate of 10°C/min in a nitrogen atmosphere using "TA3000-DSC" manufactured by METTLER TOLEDO. In a DSC chart, the inflection point was regarded as a glass transition temperature, and the endothermic peak temperature was regarded as a melting point.

Elongation (%)

The elongation of each of fiber structures was measured using a precision universal tester ("AUTOGRAPH (AGS-D type)" manufactured by Shimadzu Corp.). Each of test pieces having a width of 50 mm and a length of 200 mm was collected, while the tester was adjusted to have a distance between gripping portions of 100 mm. Then, end portions of each of the test pieces were fixed by the gripping portions, and the test piece was pulled at a speed of 100 mm/min until the test piece was broken. The average value of test forces at break was regarded as a strength at break, and the percentage of the value resulting from dividing the distance of movement by the distance, between the gripping portions, which was 100 mm was regarded as an elongation.

Evaluation of Moldability

The moldability was evaluated on the basis of the molding temperature. In the case of succeeding in performing molding at 280°C, the moldability was evaluated as "A", and meanwhile, in the case of failing to perform molding at 280°C, the moldability was evaluated as "B".

Heat Resistance

Each of test samples was placed on a plate heater preheated to 280°C, and the shape of the test sample at 2 minutes after heating was visually checked. In the case where the test sample was not melted and maintained the form thereof, the heat resistance was evaluated as "A", and meanwhile, in the case where the test sample was melted and did not maintain the form thereof, the heat resistance was evaluated as "B".

Evaluation of Load Deflection Temperature at High Temperature

Each of samples was cut into a piece having a length of 80 mm, a width of 10 mm, and a thickness of 4 mm, and the load deflection temperature of the piece was measured through a flatwise test at a load of 1.8 MPa with reference to ISO75A-f using an S-3M HDT tester (manufactured by Toyo Seiki Seisaku-sho, Ltd.).

Dimensional Change in Thickness Direction Before and After Heating

The thickness at 25°C of each of samples before heating was measured. Then, the sample was put into an air-heating furnace preheated to 260°C and was heated for 10 minutes. Thereafter, dimensional change ratio in the thickness direction was calculated by the following equation from the thickness of the sample before heating and the thickness of the sample after heating.

Proportion of dimensional change in thickness direction (%) = thickness of sample after heating (mm)/thickness of sample before heating (mm) $\times$ 100

Evaluation of Handleability

In a process lasting until each of fiber structures was set in a mold, presence/absence of fibers and/or particles falling off from the fiber structure was visually checked. In the case of occurrence of no fall-off, the handleability was evaluated as "A", and meanwhile, in the case of occurrence of fall-off, the handleability was evaluated as "B".

Molding Cycle Property

The total molding time of the heating step and the cooling step was measured. In the case where the total molding time was 20 minutes or shorter, the molding cycle property was evaluated as "A", and meanwhile, in the case where the total molding time was longer than 20 minutes, the molding cycle property was evaluated as "B".

Example 1

(1) Producing amorphous epoxy-type fibers

A bisphenol A (BPA) phenoxy resin ("YP-50s" manufactured by NIPPON STEEL Chemical & Material Co., Ltd.) having a weight-average molecular weight of 60000, a glass transition temperature of 84°C, and a melt viscosity of 890 poise at 300°C and at a shear velocity of 1000 $sec^{-1}$, was used as an amorphous epoxy-type resin. This resin was melt-extruded using a twin-screw extruder and discharged at a spinning temperature of 300°C through a round-hole nozzle having 100 holes with a hole diameter of 0.2 mm. With the ratio (draft ratio) between the discharging speed and the winding speed being adjusted to 37.1, the discharged resin was wound at a winding speed of 167 m/min. The obtained amorphous epoxy-type fibers had a birefringence value of 0.00146, an average fiber diameter of 33 μm, and Tg of 84°C.

(2) Producing polycarbonate-type fibers

A resin having a weight-average molecular weight of 52300 and a glass transition temperature of 145°C was used as a polycarbonate-type resin. This resin was melt-extruded using a twin-screw extruder and discharged at a spinning temperature of 320°C through a round-hole nozzle having 100 holes with a hole diameter of 0.2 mm. With the ratio (draft ratio) between the discharging speed and the winding speed being adjusted to 143, the discharged resin was wound at a winding speed of 1500 m/min. The obtained polycarbonate-type fibers had an orientation degree of 0.57, an average fiber diameter of 15 μm, and Tg of 145°C.

(3) Producing fiber structure

20 parts by weight of the amorphous epoxy-type fibers obtained in the step (1) (used as cut fibers obtained by crimping filaments of the fibers and then cutting the filaments to have a fiber length of about 51 mm), 30 parts by weight of the polycarbonate-type fibers obtained in the step (2) (used as cut fibers obtained by crimping filaments of the fibers and then cutting the filaments to have a fiber length of about 51 mm), and 50 parts by weight of glass fibers as reinforcing fibers (manufactured by Nippon Electric Glass Co., Ltd., the fibers having an average fiber diameter of 14 μm and being used as cut fibers obtained by cutting filaments of the fibers into a fiber length of 51 mm), were subjected to a needle punching process. Consequently, a dry-laid nonwoven fabric having a basis weight of 650 $g/m^2$ was obtained as a fiber structure.

(4) Producing crosslinked molded body

Five sheets of the fiber structures obtained in the step (3) as an overlaid material was disposed in a mold (250 mm square) and was subjected to press forming at 280°C under a pressure of 5 $N/mm^2$. Then, the mold was cooled to 220°C to obtain a molded body having a thickness of 2 mm. It should be noted that the temperature at which cooling step was ended was determined when the molded body was not further expanded after being taken out from the mold under pressure release. The obtained molded body had a good appearance since none of surface roughness, unevenness in the thickness, shrinkage, and warp was observed. Evaluations were performed on the obtained fiber structure and the obtained molded body, and the results thereof are indicated in Table 1.

Example 2

A dry-laid nonwoven fabric having a basis weight of 650 $g/m^2$ was produced as a fiber structure through the needle punching process in the same manner as in Example 1, except that: the amount of the amorphous epoxy-type fibers was set to 40 parts by weight; and the amount of the polycarbonate-type fibers was set to 10 parts by weight. Then, a molded body was obtained from the fiber structure. The obtained molded body had a good appearance since none of surface roughness, unevenness in the thickness, shrinkage, and warp was observed. Evaluations were performed on the obtained fiber structure and the obtained molded body, and the results thereof are indicated in Table 1.

Example 3

A dry-laid nonwoven fabric having a basis weight of 600 g/m$^2$ was manufactured as a fiber structure through the needle punching process, and then a molded body was produced in the same manner as in Example 1 except that carbon fibers (manufactured by TEIJIN LIMITED, the fibers having an average fiber diameter of 7 μm and being used as cut fibers obtained by cutting filaments of the fibers into a fiber length of 51 mm) were used as reinforcing fibers. The obtained molded body had a good appearance since none of surface roughness, unevenness in the thickness, shrinkage, and warp was observed. Evaluations were performed on the obtained fiber structure and the obtained molded body, and the results thereof are indicated in Table 1.

Example 4

A wet-laid nonwoven fabric (mixture paper) having a basis weight of 160 g/m$^2$ was obtained as a fiber structure through a wet-laid process from a slurry containing 40 parts by weight of the amorphous epoxy-type fibers obtained in the step (1) in Example 1 (used as cut fibers obtained by cutting filaments of the fibers into a fiber length of 13 mm), 10 parts by weight of the polycarbonate-type fibers obtained in the step (2) in Example 1 (used as cut fibers obtained by cutting filaments of the fibers into a fiber length of 13 mm), and 50 parts by weight of glass fibers as reinforcing fibers (manufactured by Nippon Electric Glass Co., Ltd., the fibers having an average fiber diameter of 11 μm, a fiber length of 13 mm, and a specific gravity of 2.5 g/cm$^3$). In a mold (250 mm square), was disposed 20 sheets of the fiber structures as an overlaid material and was subjected to press forming at 280°C under a pressure of 5 N/mm$^2$. Then, the mold was cooled to 220°C to obtain a molded body having a thickness of 2 mm. The obtained molded body had a good appearance since none of surface roughness, unevenness in the thickness, shrinkage, and warp was observed. Evaluations were performed on the obtained fiber structure and the obtained molded body, and the results thereof are indicated in Table 1.

Example 5

A wet-laid nonwoven fabric having a basis weight of 160 g/m$^2$ was manufactured as a fiber structure through the wet-laid process and then a molded body was obtained from the fiber structures in the same manner as in Example 4, except that: the amount of the amorphous epoxy-type fibers was set to 20 parts by weight; and the amount of the polycarbonate-type fibers was set to 30 parts by weight. The obtained molded body had a good appearance since none of surface roughness, unevenness in the thickness, shrinkage, and warp was observed. Evaluations were performed on the obtained fiber structure and the obtained molded body, and the results thereof are indicated in Table 1.

Example 6

A wet-laid nonwoven fabric having a basis weight of 150 g/m$^2$ was manufactured as a fiber structure through the wet-laid process and then a molded body was obtained from the fiber structures in the same manner as in Example 5, except that carbon fibers (manufactured by TEIJIN LIMITED, the fibers having an average fiber diameter of 7 μm and a fiber length of 13 mm) were used as reinforcing fibers. The obtained molded body had a good appearance since none of surface roughness, unevenness in the thickness, shrinkage, and warp was observed. Evaluations were performed on the obtained fiber structure and the obtained molded body, and the results thereof are indicated in Table 1.

Example 7

A fiber structure was manufactured and then a molded body was obtained from the fiber structures in the same manner as in Example 1, except that: the amount of the amorphous epoxy-type fibers was set to 35 parts by weight; the amount of the polycarbonate-type fibers was set to 35 parts by weight; and the amount of the reinforcing fibers was set to 30 parts by weight. The obtained molded body had a good appearance since none of surface roughness, unevenness in the thickness, shrinkage, and warp was observed. Evaluations were performed on the obtained fiber structure and the obtained molded body, and the results thereof are indicated in Table 1.

Example 8

Amorphous epoxy-type fibers were obtained in the same manner as in Example 1, except that the fibers were obtained by, with the ratio (draft ratio) between the discharging speed and the winding speed being adjusted to 18.6, performing winding at a winding speed of 167 m/min and further performing drawing at a drawing temperature of 100°C, a drawing speed of 12 m/min, and a drawing ratio of 1.5 times. The obtained amorphous epoxy-type fibers had a birefringence value of 0.00351, an average fiber diameter of 25 μm, and Tg of 84°C. A dry-laid nonwoven fabric having

a basis weight of 650 g/$m^2$ was manufactured as a fiber structure through the needle punching process and then a molded body was obtained from the fiber structures in the same manner as in Example 1, except that these amorphous epoxy-type fibers were used. The obtained molded body had a comparatively good appearance since neither shrinkage nor warp was observed over the entire molded body although surface roughness and unevenness in the thickness were observed a little. Evaluations were performed on the obtained fiber structure and the obtained molded body, and the results thereof are indicated in Table 1.

Example 9

Amorphous epoxy-type fibers were obtained in the same manner as in Example 1, except that the fibers were obtained by, with the ratio (draft ratio) between the discharging speed and the winding speed being adjusted to 18.6, performing winding at a winding speed of 167 m/min and further performing drawing at a drawing temperature of 100°C, a drawing speed of 12 m/min, and a drawing ratio of 1.75 times. The obtained amorphous epoxy-type fibers had a birefringence value of 0.00809, an average fiber diameter of 36 μm, and Tg of 84°C. A dry-laid nonwoven fabric having a basis weight of 650 g/$m^2$ was manufactured as a fiber structure through the needle punching process and then a molded body was obtained from the fiber structures in the same manner as in Example 1, except that these amorphous epoxy-type fibers were used. Surface roughness and unevenness in the thickness of the obtained molded body were observed although neither shrinkage nor warp was observed over the entire molded body. Evaluations were performed on the obtained fiber structure and the obtained molded body, and the results thereof are indicated in Table 1.

Comparative Example 1

A wet-laid nonwoven fabric was obtained through the wet-laid process from a slurry containing 50 parts by weight of glass fibers (manufactured by Nippon Electric Glass Co., Ltd., the fibers having an average fiber diameter of 11 μm and a fiber length of 13 mm) in the same manner as in Example 5, except that neither amorphous epoxy-type fibers nor polycarbonate-type fibers were included.

Next, 20 parts by weight of the amorphous epoxy-type resin and 30 parts by weight of the polycarbonate resin were prepared. The resins were pulverized so as to be made into powders each having an average particle diameter of 60 μm. The powders were blended using a dry powder mixer. Then, the entirety of the resultant powder mixture was adhered onto the wet-laid nonwoven fabric, whereby a fiber structure having a basis weight of 160 g/$m^2$ was manufactured.

In a mold (250 mm square) was disposed 20 sheets of the fiber structures as an overlaid material and was subjected to press forming at 280°C under a pressure of 5 N/$mm^2$. Then, the mold was cooled to 220°C to obtain a molded body having a thickness of 2 mm. Evaluations were performed on the obtained fiber structure and the obtained molded body, and the results thereof are indicated in Table 1.

Comparative Example 2

A fiber structure was manufactured in the same manner as in Example 1, except that: the amount of the amorphous epoxy-type fibers was set to 0 parts by weight; the amount of polyetherimide-type fibers (manufactured by KURARAY CO., LTD., the fibers having an average fiber diameter of 15 μm and being crimped fibers having a fiber length of about 51 mm) was set to 50 parts by weight; and the amount of the reinforcing fibers was set to 50 parts by weight. Then, a molded body was obtained from the fiber structure in the same manner as in Example 1, except that: the molding temperature was set to 340°C; and the cooling temperature was set to 180°C. Evaluations were performed on the obtained fiber structure and the obtained molded body, and the results thereof are indicated in Table 1.

Comparative Example 3

A fiber structure was manufactured in the same manner as in Example 1, except that: the amount of the amorphous epoxy-type fibers was set to 20 parts by weight; the amount of the polyetherimide-type fibers (manufactured by KURARAY CO., LTD., the fibers having an average fiber diameter of 15 μm and being crimped fibers having a fiber length of about 51 mm) was set to 30 parts by weight; and the amount of the reinforcing fibers was set to 50 parts by weight. Then, a molded body was obtained from the fiber structure in the same manner as in Comparative Example 2. The obtained molded body had a good appearance since none of surface roughness, unevenness in the thickness, shrinkage, and warp was observed. Evaluations were performed on the obtained fiber structure and the obtained molded body, and the results thereof are indicated in Table 1.

Table 1

| Fiber structure | | Ex. 1 | Ex. 2 | Ex. 3 | Ex. 4 | Ex. 5 | Ex. 6 | Ex. 7 | Ex. 8 | Ex. 9 | Com Ex. 1 | Com Ex. 2 | Com Ex. 3 |
|---|---|---|---|---|---|---|---|---|---|---|---|---|---|
| Process | | Diy-laid | Dry-laid | Dry-laid | Wet-laid | Wet-laid | Wet-laid | Dry-laid | Dry-laid | Dry-laid | Wet-laid | Dry-laid | Dry-laid |
| TP resin A | Type | AE | AE | AE | AE | AE | AE | AE | AE | AE | AE | - | AE |
| | Form | Fiber | Fiber | Fiber | Fiber | Fiber | Fiber | Fiber | Fiber | Fiber | Powder | - | Fiber |
| | AFD or APD [μm] | 33 | 33 | 33 | 33 | 33 | 33 | 33 | 25 | 36 | 60 | - | 33 |
| | Tg [°C] | 84 | 84 | 84 | 84 | 84 | 84 | 84 | 84 | 84 | 84 | - | 84 |
| | Content [pbw] | 20 | 40 | 20 | 40 | 20 | 20 | 35 | 20 | 20 | 20 | - | 20 |
| | Birefringence value of fiber | 0.00146 | 0.0146 | 0.00146 | 0.00146 | 0.00146 | 0.00146 | 0.00146 | 0.00351 | 0.00809 | - | - | 0.00146 |
| TP resin B | Type | PC | PC | PC | PC | PC | PC | PC | PC | PC | PC | PEI | PEI |
| | Form | Fiber | Fiber | Fiber | Fiber | Fiber | Fiber | Fiber | Fiber | Fiber | Powder | Fiber | Fiber |
| | AFD or APD [μm] | 15 | 15 | 15 | 15 | 15 | 15 | 15 | 15 | 15 | 60 | 15 | 15 |
| | Softening point [°C] | 145 | 145 | 145 | 145 | 145 | 145 | 145 | 145 | 145 | 145 | 217 | 217 |
| | Content [pbw] | 30 | 10 | 30 | 10 | 30 | 30 | 35 | 30 | 30 | 30 | 50 | 30 |
| Reinforcing fiber | Type | GF | GF | CF | GF | GF | CF | GF | GF | GF | GF | GF | GF |
| | AFD [μm] | 14 | 14 | 7 | 11 | 11 | 7 | 14 | 14 | 14 | 11 | 14 | 14 |
| | Content [pbw] | 50 | 50 | 50 | 50 | 50 | 50 | 30 | 50 | 50 | 50 | 50 | 50 |
| FD of TP resin A fibers relative to FD of reinforcing fibers regarded as 100 | | 236 | 236 | 471 | 300 | 300 | 471 | 236 | 179 | 257 | - | - | 236 |
| FD of TP resin B fibers relative to FD of reinforcing fibers regarded as 100 | | 107 | 107 | 214 | 136 | 136 | 214 | 107 | 107 | 107 | - | - | 107 |
| Content ratio of TP resins A : B | | 40:60 | 80:20 | 40:60 | 80:20 | 40:60 | 40:60 | 50:50 | 40:60 | 40:60 | 40:60 | - | 40:60 |

(continued)

| Fiber structure | Ex. 1 | Ex. 2 | Ex. 3 | Ex. 4 | Ex. 5 | Ex. 6 | Ex. 7 | Ex. 8 | Ex. 9 | Com Ex. 1 | Com Ex. 2 | Com Ex. 3 |
|---|---|---|---|---|---|---|---|---|---|---|---|---|
| Difference in Tg of resin A and softening point of resin B [°C] | 61 | 61 | 61 | 61 | 61 | 61 | 61 | 61 | 61 | 61 | - | 133 |
| Elongation [%] | 48 | 49 | 60 | 2 | 2 | 3 | 47 | 48 | 46 | - | 47 | 50 |
| AE: Amorphous epoxy, PC: Polycarbonate, PEI: Polyetherimide, TP: Thermoplastic, AFD: Average fiber diameter, APD: Average particle diameter, Tg: Glass transition temperature, GF: Glass fiber, CF: Carbon fiber, FD: Fiber diameter. Pbw: parts by weight | | | | | | | | | | | | |

Table 1 (continued)

| Molded body | | Ex. 1 | Ex. 2 | Ex. 3 | Ex. 4 | Ex. 5 | Ex. 6 | Ex. 7 | Ex. 8 | Ex. 9 | Com Ex. 1 | Com Ex. 2 | Com Ex. 3 |
|---|---|---|---|---|---|---|---|---|---|---|---|---|---|
| Moldability | Molding temperature [°C] | A (280) | A (280) | A (280) | A (280) | A (280) | A (280) | A (280) | A (280) | A (280) | A (280) | B (340) | B (340) |
| Evaluation of heat resistance | 280°C | A | A | A | A | A | A | A | A | A | A | B | B |
| Load deflection temperature [°C] | | >300 | 280 | >300 | 280 | >300 | >300 | >300 | >300 | >300 | >300 | 206 | 175 |
| Dimensional change in thickness direction [%] | | 128 | 107 | 138 | 110 | 131 | 141 | 135 | 136 | 125 | 128 | 366 | 380 |
| Evaluation of handleability | | A | A | A | A | A | A | A | A | A | B | A | A |
| Molding cycle property | | A | A | A | A | A | A | A | A | A | A | B | B |

As indicated in Table 1, the fiber structures Examples 1 to 9 show satisfactory handleability for molding of the molded bodies, and further are excellent in molding cycle property.

In addition, despite the fact that the molding temperature for processing the fiber structure to obtain the molded body is 280°C, the molded body resulting from molding exhibits heat resistance even upon increase to 280°C which is the molding temperature. Furthermore, regarding measurement of the load deflection temperatures, the molded bodies reveal to have a load deflection temperature of 280°C or higher, and, in particular, the load deflection temperature in each of Examples 1, 3, and 5-9 is higher than 300°C.

Furthermore, not only the reinforcing fibers but also at least one of the thermoplastic resins A and B is in the form of fibers, and thus the fiber structure can be used while being elongated. In particular, in the case of a dry fiber structure, the elongation can be improved.

Furthermore, as compared to Comparative Examples 2 and 3 without heat-crosslinking reaction, all of the Examples show reduced dimensional change in the thickness direction before and after heating, as well as good control of dimensional change at the high temperature.

On the other hand, in Comparative Example 1, each of the thermoplastic resins A and B having a powder shape resulted in occurrence of substances fell off during the procedure of carrying and/or cutting the fiber structures into an appropriate size, even though the fiber structure was formed with the reinforcing fibers, whereby this fiber structure is inferior in handleability. In addition, in Comparative Example 1, the fiber structure was not able to be tested regarding the elongation thereof.

In each of Comparative Examples 2 and 3, since the thermoplastic resin B used is a polyetherimide resin that is not crosslinkable with the thermoplastic resin A, even though the molding temperature is as high as 340°C, the molded bodies obtained in Comparative Examples 2 and 3 cannot exhibit heat resistance at 280°C because the temperature of 280°C exceeds the glass transition temperature of 217°C. In addition, the load deflection temperature of each of the molded bodies is much lower than those in the Examples.

INDUSTRIAL APPLICABILITY

The fiber structure according to the present invention can be suitably used for various purposes. Furthermore, a crosslinked molded body obtained by heat-crosslinking the thermoplastic resins in the fiber structure according to the present invention with each other so as to form a matrix makes it possible to not only improve the heat resistance owing to a crosslinked configuration but also form a useful object having a complicated shape. Thus, the crosslinked molded body can be highly effectively used as, for example, a housing for electric/electronic devices, a part for civil engineering/building materials, a member for vehicles, an article for sports and leisure, or the like.

Although the present invention has been fully described in connection with the preferred embodiment thereof, those skilled in the art will readily conceive numerous changes and modifications within the framework of obviousness upon the reading of the specification herein presented of the present invention. Accordingly, such changes and modifications are, unless they depart from the scope of the present invention as delivered from the claims annexed hereto, to be construed as included therein.

## Claims

1. A fiber structure comprising at least a thermoplastic resin A and a thermoplastic resin B both being heat-crosslinkable with each other,

    the thermoplastic resin A being an amorphous epoxy-type resin; and
    at least one of the thermoplastic resins A and B having a fiber shape.

2. The fiber structure according to claim 1, wherein each of the thermoplastic resins A and B has a fiber shape.

3. The fiber structure according to claim 1 or 2, wherein the thermoplastic resin A comprises an amorphous epoxy-type fiber having a birefringence value of 0.005 or less.

4. The fiber structure according to any one of claims 1 to 3, wherein a weight ratio of the thermoplastic resin A with respect to the thermoplastic resin B (A/B) is from 30/70 to 90/10.

5. The fiber structure according to any one of claims 1 to 4, wherein the fiber structure is a nonwoven fabric.

6. The fiber structure according to any one of claims 1 to 5, wherein the thermoplastic resin A has a glass transition temperature which is lower than a softening point of the thermoplastic resin B, and the temperature difference between them is 40°C or higher.

7. The fiber structure according to any one of claims 1 to 6, wherein the thermoplastic resin B comprises a polycarbonate-type resin.

8. The fiber structure according to any one of claims 1 to 7, further comprising reinforcing fibers.

9. The fiber structure according to claim 8, wherein a weight ratio of a total amount of the thermoplastic resin A and the thermoplastic resin B with respect to the reinforcing fibers is from 70/30 to 25/75.

10. The fiber structure according to claim 8 or 9, wherein at least one of the thermoplastic resins A and B has a fiber shape having a fiber diameter which is from 5 to 3500 when the reinforcing fibers are regarded to have a fiber diameter of 100.

11. The fiber structure according to any one of claims 1 to 10, wherein the fiber structure has an elongation of 1% or higher.

12. A method for producing a crosslinked molded body at least comprising:

    preparing the fiber structure recited in any one of claims 1 to 11, and
    heat-molding the prepared fiber structure as one layer or an overlaid material comprising two or more of the prepared fiber structures at a temperature equal to or higher than a flow starting temperature of each of the thermoplastic resins A and B.

13. The method according to claim 12, wherein the prepared fiber structure is heat-molded using a mold having a three-dimensional shape in the heat-molding.

14. The method according to claim 12 or 13, wherein the heat-molding is performed by a heat treatment at a heating temperature of 300°C or lower.

15. The method according to claim 14, further comprising performing cooling at a temperature of from (HT - 80) to (HT - 0)°C, which is 0 to 80°C lower than the heating temperature HT of the heat-molding.

16. A crosslinked molded body of the fiber structure according to any one of claims 1 to 11, wherein the crosslinked molded body has a load deflection temperature of 250°C or higher.

17. The crosslinked molded body according to claim 16, wherein the crosslinked molded body has a region of a complicated shape.

**INTERNATIONAL SEARCH REPORT**

International application No.
**PCT/JP2022/024323**

**A. CLASSIFICATION OF SUBJECT MATTER**

***C08J 5/04***(2006.01)i
FI: C08J5/04 CFC

According to International Patent Classification (IPC) or to both national classification and IPC

**B. FIELDS SEARCHED**

Minimum documentation searched (classification system followed by classification symbols)

B29B11/16;15/08-15/14, C08J5/04-5/10;5/24, B29C70/00-70/88, B32B1/00-43/00, D04H1/00-18/04

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2020/196617 A1 (NIPPON STEEL CHEMICAL & MATERIAL CO., LTD.) 01 October 2020 (2020-10-01)<br>whole document, particularly, claims, paragraphs [0034]-[0057], [0066]-[0070], [0076]-[0081], [0087], [0094]-[0098], [0110]-[0153], fig. 1-5 | 1, 2, 4, 6-10, 12-17 |
| A | WO 2020/179584 A1 (KURARAY CO., LTD.) 10 September 2020 (2020-09-10)<br>whole document | 1-17 |
| A | WO 2021/060179 A1 (KURARAY CO., LTD.) 01 April 2021 (2021-04-01)<br>whole document | 1-17 |
| P, A | WO 2021/153178 A1 (KURARAY CO., LTD.) 05 August 2021 (2021-08-05)<br>whole document | 1-17 |
| P, A | WO 2021/200793 A1 (NIPPON STEEL CHEMICAL & MATERIAL CO., LTD.) 07 October 2021 (2021-10-07)<br>whole document | 1-17 |

☐ Further documents are listed in the continuation of Box C.  ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **21 July 2022** | **02 August 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

**INTERNATIONAL SEARCH REPORT**
**Information on patent family members**

International application No.
**PCT/JP2022/024323**

| Patent document cited in search report | Publication date (day/month/year) | Patent family member(s) | Publication date (day/month/year) |
|---|---|---|---|
| WO 2020/196617 A1 | 01 October 2020 | CN 113613878 A<br>TW 202100650 A | |
| WO 2020/179584 A1 | 10 September 2020 | US 2021/0381145 A1<br>whole document<br>CN 113544322 A<br>KR 10-2021-0134340 A<br>TW 202100343 A | |
| WO 2021/060179 A1 | 01 April 2021 | TW 202124543 A | |
| WO 2021/153178 A1 | 05 August 2021 | (Family: none) | |
| WO 2021/200793 A1 | 07 October 2021 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2021104634 A
- WO 2016152856 A
- WO 2014021084 A